Europäisches Patentamt

European Patent Office

Office européen des brevets

(19)

(11) Veröffentlichungsnummer: **0 197 395 B1**

## (12) EUROPÄISCHE PATENTSCHRIFT

(45) Veröffentlichungstag der Patentschrift:
14.11.90

(21) Anmeldenummer: 86103888.3

(22) Anmeldetag: 21.03.86

(51) Int. Cl.⁵: **C08L 21/00**
// (C08L21/00, 9:02, 75:04, 61:06)

(54) **Verstärkte Kautschukmischungen, Verfahren zu ihrer Herstellung und ihre Verwendung.**

(30) Priorität: 29.03.85 DE 3511549
14.02.86 DE 3604744

(43) Veröffentlichungstag der Anmeldung:
15.10.86 Patentblatt 86/42

(45) Bekanntmachung des Hinweises auf die Patenterteilung:
14.11.90 Patentblatt 90/46

(84) Benannte Vertragsstaaten:
AT BE CH DE FR GB IT LI LU NL

(56) Entgegenhaltungen:
EP-A- 0 090 387
DE-A- 2 163 193
DE-A- 2 444 433
FR-A- 1 585 214
GB-A- 2 076 846
GB-A- 2 114 579
US-A- 2 659 706
US-A- 3 427 366

(73) Patentinhaber: HOECHST AKTIENGESELLSCHAFT,
Postfach 80 03 20, D-6230 Frankfurt am Main 80(DE)

(72) Erfinder: Sattelmeyer, Richard, Dr., Gabelsbornstr. 32,
D-6200 Wiesbaden(DE)

**Beschreibung**

Es ist Stand der Technik, Mischungen aus Natur- und/oder Synthesekautschuk durch Zusatz von härtenden Kunstharzen, insbesondere Phenolharzen zu verstärken. Bei der Herstellung der Mischungen, vorzugsweise aber während der Vukanisation gehen die zugegebenen Harze in den vernetzten Zustand über und verbessern dabei einige wichtige mechanische Eigenschaften der Vulkanisate, z.B. die Härte und die Spannungswerte. Im allgemeinen verwendet man als verstärkend wirkende Phenolharze Produkte vom Novolak-Typ, d.h. thermoplastische, schmelzbare Harze, die durch Zusatz von Härtungsmitteln zur Vernetzung gebracht werden können. Als Härtungsmittel werden Formaldehyd abspaltende bzw. über Methylen- oder Methylolgruppen reagierende Substanzen wie Hexamethylentetramin und Methylolgruppen enthaltende teil- bzw. volleverätherte Melamin- und Harnstoffharze eingesetzt. Auf diese Weise lassen sich harzverstärkte Gummimischungen auf Basis von Natur-, Styrolbutadien-, Polybutadien-Kautschuk und anderen synthetischen Kautschuktypen herstellen.

Wird Nitrilkautschuk als Elastomerbasis zugrunde gelegt, erreicht man bei Einsatz eines unmodifizierten Novolaks auf Grundlage von unsubstituiertem Phenol durch Härtung mit 10 % Hexamethylentetramin, bezogen auf das Harz-Härter-Gemisch, einer im allgemeinen bei der Kautschukverstärkung üblicherweise verwendeten Menge dieses Härters, einen deutlich schlechteren Verstärkungseffekt als bei niedrigeren, etwa halb so hohen Dosierungen des Härtungsmittels. Zur Erzielung einer optimalen Verstärkerwirkung von Nitrilkautschuk müssen daher andere Kriterien verantwortlich sein.

Aus der US-PS 4,383,072 ist eine lederharte Kautschukmischung bekannt, die zur Herstellung eines sogenannten "Verbundprofils" verwendet werden kann, das durch gemeinsame Extrusion und Vulkanisation von zwei verschiedenen Gummiqualitäten angefertigt wird. Die lederharte Mischung setzt sich zusammen aus 20 bis 50 Gewichtsteilen eines polaren Kautschukes, der unter Vulkanisationsbedingungen Säuregruppen abspaltet, wie Polychloropren (CR), chlorsulfoniertes Polyethylen (CSM) oder chloriertes Polyethylen und 60 bis 80 Gewichtsteilen eines nicht-polaren Kautschuks, der diese Gruppen nicht abspaltet z.B. Natur- bzw. Butadien-Kautschuk. Als nicht-polarer Kautschuktyp wird in der Veröffentlichung auch Nitrilkautschuk bezeichnet. Der Zusatz der angeführten säureabspaltenden chlorhaltigen Kautschuke ist für die Erzielung besonderer gewünschter Eigenschaften wie Porenfreiheit, Härte, Zähigkeit und Splitterbeständigkeit erforderlich. Diese Mischungen sind daher auf ein enges Spezialgebiet beschränkt, sie können aber nicht zur Herstellung von vielen technischen Gummiwaren z.B. Reifen eingesetzt werden.

In einer Firmenschift der Fa. Hooker Chemical Corporation, USA, mit dem Titel "Durez Resins for the Rubber Industry", Ausgabe 1968 ist erwähnt worden, daß der Ersatz von einem Teil eines SBR-Kautschuks durch Acrylnitrilkautschuk in phenolharzverstärkten, nicht mit Ruß gefüllten Gummimischungen zu einer höheren Härte und besseren Spannungswerten führt. Als Acrylnitrilkautschuk wird gemäß dieser Literaturstelle ein Typ mit 31% Acrylnitrilgehalt eingesetzt.

Überraschenderweise wurde nun gefunden, daß verstärkende Phenolharzsysteme bei der Vulkanisation von Mischungen auf Basis von unpolaren Kautschuken, z.B. Natur- oder Styrol-Butadien-Kautschuk in Gegenwart von chlorfreien, polaren Polymeren, d.h. Kautschuk wie Nitrilkautschuk und zwar mit mindestens 32% Acrylnitrilgehalt, Polyurethankautschuk einen wesentlich höheren Verstärkungseffekt bewirken als bei Abwesenheit der polaren Kautschuktypen oder bei Einsatz von Nitrilkautschuktypen mit bis zu 31% Acrylnitrilgehalt.

Gegenstand der Erfindung ist eine verstärkte Kautschukmischung aus A) mindestens einem Natur-, Styrolbutadien-Polybutadien-, Polyisopren-, Transpolyoctenylen-, Ethylen-Propylen-Dien-Terpolymer- und Butylkautschuk, B) mindestens einem Novolak-Harz und/oder reaktivem Polyphenol, C) Härtungsmitteln und gegebenenfalls D) üblichen Zusatzstoffen, die dadurch gekennzeichnet ist, daß die Kautschukmischung als zusätzliche Komponente E) mindestens einen polaren, chlorfreien Kautschuk in Form von Nitrilkautschuk mit mindestens 32% Nitrilgehalt oder Polyurethankautschuk in einem Gewichtsanteil von 1 bis 49, vorzugsweise 2 bis 39, insbesondere 3 bis 30 Gew.-%, bezogen auf die Gesamtmenge an Kautschuk enthält.

Mit Hilfe der Erfindung lassen sich nun Gummimischungen mit einer optimalen Harzvernetzung auf Basis von Natur-kautschuk und/oder anderen unpolaren Kautschuktypen herstellen, die infolge des Zusatzes von polaren, chlorfreien Kautschukarten und einem Verstärkerharzsystem noch höhere Härten und Spannungswerte aufweisen als bei alleiniger Verwendung des Verstärkerharzsystems. Die Möglichkeit zur Steigerung des Verstärkungseffektes an einer Gummimischung beispielsweise ohne Erhöhung der Anteile der bisher üblicherweise eingesetzten, verstärkend wirkenden Komponenten wie Ruß- oder Phenolharzsystemen oder ohne Änderung der Art der verstärkenden Komponente z.B. der Einsatz von feinteiligem Ruß, der eine höhere Verstärkung bewirkt, ist unerwartet und war bisher nicht bekannt.

Es war auch nicht zu erwarten, daß Zusätze von chlorhaltigen Polymeren, wie beispielsweise chlorsulfoniertem Polyethylen, überhaupt keine Verstärkerwirkung oder, wie Polychloropren, eine deutlich geringere Verstärkung als Nitrilkautschuk ergeben. Der erfindungsgemäße Verstärkungseffekt beruht somit nicht auf dem Chlorgehalt und der Säureabspaltung der zugesetzten Kautschukomponenten, da lediglich chlorfreie Polymere, z.B. Nitril- und Polyurethan-Kautschuke die erwünschte hohe Verstärkung bewirken, sondern beispielsweise auf dem Acrylnitrilgehalt in einem Nitrilkautschuk.

Als Vorteile ergeben sich somit Möglichkeiten zur Herstellung einer Gummimischung mit hoher Härte unter Verwendung geringerer Rußmengen als nach der bisherigen Arbeitsweise. Eine Reduzierung der Rußmenge, die bei den bisher üblichen Vulkanisaten mit hohem Verstärkungsgrad im allgemeinen deutlich über 60 Gewichtsteilen, bezogen auf 100 Gewichtsteile Kautschuk liegen muß, bedeutet aber eine Verringerung des Energiebedarfs beim Mischvorgang und eine bessere Verarbeitbarkeit, z.B. bei der Extrusion. Eine Verminderung der Rußmenge bewirkt daher aber auch eine Herabsetzung des Gewichts von entsprechenden Fertigteilen oder Komponenten eines Fertigproduktes, was z.B. für Autoreifen Vorteile mit sich bringt.

Gegenstand der Erfindung ist auch ein Verfahren zur Herstellung der verstärkten Kautschukmischungen und deren Verwendung.

Geeignete verstärkbare Kautschuktypen A) sind beispielsweise Naturkautschuk (NR), Styrol-Butadien-Kautschuk (SBR), Polybutadien, Polyisopren, Transpolyoctenylen-Butylkautschuk, Ethylen-Propylen-Dien-Terpolymer-Kautschuk oder deren Gemische, wie sie gewöhnlich in der Reifenindustrie oder zur Herstellung technischer Gummiwaren verwendet werden. Styrol-Butadien- und Naturkautschuk oder Mischungen dieser Kautschuktypen mit untergeordneten Mengen an anderen Kautschuktypen sind bevorzugt. Sie können in beliebiger Lieferform, z.B. als Ballen oder Pulver sowie z.B. mit Ruß Anwendung finden.

Als Komponente E) wird bei der erfindungsgemäßen Mischung mindestens ein polarer, chlorfreier Kautschuk z.B. Nitrilkautschuk (NBR) (Copolymer von Acrylnitril mit Butadien oder Isopren) oder Polyurethankautschuk (PU) eingesetzt. Besonders vorteilhaft ist die Verwendung von NBR-Kautschuk, d.h. einem Copolymeren, überwiegend bestehend aus Acrylnitril und Butadien mit einem Gehalt an Acrylnitril von mindestens 32 und im allgemeinen nicht mehr als 60, vorzugsweise nicht mehr als 50 Gew.-%. Auch Mischungen der einzelnen Kautschuktypen z.B. der verschiedenen Nitrilkautschuke können eingesetzt werden.

Der polare chlorfreie Kautschuk kann in üblicher Lieferform vorliegen und bei dem erfindungsgemäßen Verfahren entweder direkt in die Kautschukmischung eingearbeitet werden oder als Modifizierungsmittel in dem Verstärkerharz oder einer anderen Mischungskomponente, z.B. einem Masterbatch, enthalten sein. Als Modifizierungsmittel für das Harz kann er z.B. auf bekannte Weise diesem physikalisch zugemischt werden oder aber durch chemische Bindung an das Verstärkerharz angelagert sein.

Zur Verstärkung von Kautschuk geeignete Harze B) sind im allgemeinen Phenolnovolake oder andere aktive Polyphenole bzw. Mehrkernphenole wie Resorcin, Diphenylolpropan oder -methan bzw. Naphthole und analoge Verbindungen. Besonders geeignete Novolakharze sind z.B. solche, die aus Phenol und/oder mehrwertigen Ein- oder Mehrkernphenolen, wie Resorcin, Bisphenolen, z.B. Diphenylolpropan und/oder Diphenylolmethan, oder mit einer Kohlenwasserstoffgruppe substituierten ein- oder mehrwertigen Phenolen, wie Alkyl-oder Aralkylphenolen mit z.B. 1 bis 20, vorzugsweise 4 bis 18 C-Atomen im Substituenten, wie tert. Butylphenol, Octylphenol, Nonylphenol, Nierenbaum-(Cashew-)Nußschalenöl, styrolysiertem oder mit Fettsäuren, wie Leinölfettsäuren, modifiziertem Phenol, oder Phenylphenol und Aldehyden, wie Acetaldehyd, vorzugsweise aber Formaldehyd, im sauren Medium erhalten werden. Einsetzbar sind auch mit anorganischen Bestandteilen modifizierte Phenolharze zur Verstärkung von Kautschuk z.B. mit Silizium-, Aluminium- oder Bor-Verbindungen modifizierte Typen. Die Novolake können außerdem weichmachende Anteile, wie Polyethylenglykole, Tallöl oder andere übliche Plastifiziermittel enthalten. Grundsätzlich können auch Novolake ausschließlich aus mit Kohlenwasserstoffgruppen substituierten Phenolen, die eine Alkylgruppe von 1 bis 20 C-Atomen tragen, verwendet werden; dies gilt insbesondere für solche mit einem Alkylrest mit z.B. 1 bis 4 C-Atomen in m-Stellung zur phenolischen Hydroxylgruppe. Novolake aus solchen Phenolen allein, die einen Substituenten in ortho- oder para-Stellung enthalten, kommen jedoch nur bedingt in Frage, da sie weniger gut härtbar sind. Man verwendet diese daher bevorzugt in Mischungen mit trifunktionellen Phenolen, wie m-Kresol, insbesondere aber mit Phenol. Der Begriff "trifunktionelle Phenole" bezeichnet solche, in denen die ortho- und para-Stellungen zur phenolischen Hydroxylgruppen für Reaktionen mit Aldehyden zugänglich sind. Ferner kann die Phenolkomponente der Novolake Zusätze von mehrere Alkylgruppen enthaltenden Phenolen aufweisen, wobei deren Menge z.B. bis zu 20 Mol % beträgt. Für den praktischen Gebrauch sind Novolake aus Phenol sowie Gemischen aus Phenol und mit einer Kohlenwasserstoffgruppe substituierten Phenolen mit 4 bis 18 C-Atomen im Substituenten einschließlich Nierenbaum-Nußschalenöl bevorzugt. Der Anteil der substituierten Phenole im Novolak kann dabei variieren, wobei jedoch der Novolak noch härtbar sein soll. Im allgemeinen liegt der Anteil der nicht-trifunktionellen Phenole im Gesamtgehalt der Phenole nicht höher als 80, vorzugsweise nicht höher als 65 Mol %.

Als Härter C) können beliebige Formaldehyd abspaltende und/oder freie oder veretherte Methylolgruppen enthaltende Verbindungen verwendet werden, z.B. Aminharze, wie Harnstoffharze oder Benzoguanaminharze. Bevorzugt sind aber Hexamethylentetramin (im nachfolgenden mit "Hexa" bezeichnet) sowie Melaminharze, letztere in Form von nicht bzw. teilweise oder weitgehend veretherten und ggf. höherkondensierten mehrkernigen Produkten. Der Kondensationsgrad der Aldehyd-, insbesondere Formaldehyd-Harze und ihr Gehalt an freien Methylolgruppen kann in weiteren Grenzen schwanken. Die freien Methylolgruppen können mit einwertigen Alkoholen mit 1 bis 12, vorzugsweise mit 1 bis 8 C-Atomen verethert sein, wie Methanol, Ethanol, den verschiedenen Propanolen, Butanolen, Hexanolen, Octano-

3

EP 0 197 395 B1

len, wie Ethylhexanol und n-Octanol, Nonanolen, Dodecylalkohol. Verbreiteten Einsatz findet z.B. Hexamethoxymethylmelamin.

Die zur Härtung der Novolak-Harze erforderlichen optimalen Mengen Härtungsmittel müssen in Vorversuchen, die einfach durchzuführen sind, ermittelt werden. Im allgemeinen werden etwa 2 bis 60, vorzugsweise 5 bis 50 Gew.-% Melaminharz oder 2 bis 30, vorzugsweise 2 bis 25 Gew.-% Hexamethylentetramin verwendet, bezogen auf Novolak.

Übliche Zusatzstoffe D) sind Füllstoffe, Vulkanisationsmittel, Beschleuniger, Aktivatoren und Verarbeitungshilfsmittel.

Als Füllstoffe können neben aktiven Rußen und Kieselsäuren auch Kaoline, Kreide und/oder andere übliche Materialien Einsatz finden sowie auch Pigmente. Der Einsatz von Ruß ist besonders bevorzugt. In manchen Fällen wird auf den Einsatz von Füllstoffen ganz oder weitgehend verzichtet (z.B. in transparenten Mischungen). Als Verarbeitungshilfsmittel können Öle oder Weichmacher verwendet werden, deren Gewichtsmenge zur Erzielung besonderer Effekte auch über 10 Gew.-%, bezogen auf eingesetztem Kautschuk liegen kann.

Die Vulkanisation kann ohne Schwefel und mit Vulkanisationsharzen erfolgen. Die Vulkanisation in Gegenwart von Schwefel ist aber bevorzugt. Ihr Verlauf kann durch Auswahl geeigneter, in der Kautschuktechnologie üblicher Beschleuniger, Aktivatoren und Regler den praktischen Erfordernissen angepaßt werden. Ferner werden vorteilhaft noch Alterungsschutzmittel zur Verbesserung der Eigenschaften der Vulkanisate zugesetzt.

Die erfindungsgemäß eingesetzten Ausgangsmischungen können in üblicher Weise in Innenmischern oder auf Mischwalzen hergestellt werden. Beim Einarbeiten der Harze kann es von Vorteil sein, wenn die Mischungstemperatur in irgendeiner Phase der Mischungsherstellung den Schmelzpunkt der Harze überschreitet, jedoch können ggf. auch Formulierungen, bei denen nach Zugabe der Harze die Mischtemperatur unterhalb des Schmelzpunktes beibt, höhere Härten erzielen. Ferner ist wichtig, daß die Härtungsmittel so eingearbeitet werden, daß es nicht zu einer vorzeitigen Eigenkondensation oder zu einer vorzeitigen Reaktion mit dem zu härtenden Novolak kommt. Das ist möglich, wenn die Härtungsmittel am Ende des Mischvorganges bei nicht zu hohen Temperaturen (im allgemeinen bei 80 bis 120°C) eingearbeitet werden.

Die erfindungsgemäß erhaltenen Vulkanisate können z.B. als technische Gummiwaren wie Dämpfungselemente, Gummimanschetten, Beläge, Förderbänder aber auch für Reifen verwendet werden. Dabei kann der Einsatz der erfindungsgemäßen Mischungen auch in den Schichten erfolgen, die eine gute Haftung zu eingelegten Geweben oder Geflechten haben müssen. Zur Verbesserung der Haftung kann zusätzlich die Anwendung von Haftvermittlern wie Kobalt- oder anderen Metallverbindungen und/oder Kombinationen aus Kieselsäure, Resorcin und Härtungsmittel erfolgen.

Die nachfolgend beschriebenen Versuche dienen zur Erläuterung der Zusammensetzung und der Eigenschaften der erfindungsgemäßen Gummimischungen. Es wurden Versuchsreihen mit rußfreien und rußhaltigen Formulierungen durchgeführt, wobei für die rußhaltigen Formulierungen jeweils ein Masterbatch aus dem entsprechenden Kautschuk mit 50 Gewichtsteilen Ruß, bezogen auf 100 Gewichtsteile Kautschuk verwendet wurde. Beim Mischvorgang wurden dann zum Kautschuk, bzw. zum Masterbatch die weiteren Komponenten in der Reihenfolge Stearinsäure, Zinkoxid, Alterungsschutzmittel, Schwefel und Phenolharz bei Temperaturen zwischen ca. 90 und 100°C und anschließend bei Temperaturen unter 100°C das Härtungsmittel und der Beschleuniger zugegeben.

Nach der Vulkanisation, durchgeführt unter den bei der jeweiligen Versuchsserie angegebenen Bedingungen, wurden die erhaltenen Probekörper auf folgende Eigenschaften nach den in der Praxis üblichen Methoden untersucht:
Reißfestigkeit, Reißdehnung und Spannungswerte
(bei 10 % bis 300 % Dehnung) gemäß DIN 53 504,
Härte Shore A nach DIN 53 505 und
Rückprallelastizität nach DIN 53 512.

Die in den Tabellen 1 bis 10 genannten Gummimischungen enthielten neben den dort angegebenen Komponenten folgende übliche Zusatzstoffe (in Gewichtsteilen):
1,5 T Stearinsäure
5 T Zinkoxid
1 T N-isopropyl-N-phenyl-p-phenylendiamin *
1 T 2,2,4-Trimethyl-1,2-dihydrochinolin *
2,5 T Schwefel
0,9 T Benzothiazol-2-cyclohexylsulfenamid (a)**
0,3 T Tetramethylthiurammonosulfid (b)**
* als Alterungsschutzmittel
** als Beschleuniger

Zu den Versuchsreihen 5 und 6 wurden abweichend davon die Beschleuniger (a) bzw. (b) in Mengen von 1 T bzw. 0,2 T sowie 2 T Schwefel und in der Versuchsreihe 7 als Alterungsschutzmittel nur 1 T Phenyl-β-naphthylamin eingesetzt.

In den Beispielen beziehen sich die Mengenangaben stets auf Gewichtsteile und Gewichtsprozent.

4

Beispiele:

Versuchsreihe 1 (Beispiel 1, Vergleiche A, B und C)

NR- und NBR-Kautschuk mit Phenolnovolak und Hexa, rußfrei

Die erfindungsgemäße Formulierung nach Beispiel 1 enthält Naturkautschuk, NBR-Kautschuk und ein Verstärkerharz mit Hexa als Härtungmittel, während die Vergleichsversuche A, B und C entsprechend Naturkautschuk allein, Naturkautschuk und Harz mit Härtungsmittel sowie Naturkautschuk und Nitrilkautschuk aufweisen. Als Harz wurde ein handelsüblicher Phenolnovolak mit einem Schmelzbereich zwischen 60 und 80°C (Kapillar-Verfahren DIN 53 736) und einer Viskosität bei 20°C von 170 bis 220 mPa.s (40 %ig in Ethlyenglykolmonoethylether) verwendet und als Nitrilkautschuk ein handelsübliches Produkt mit 34 % Acrylnitrilgehalt.

Aus der Tabelle 1 ist ersichtlich, daß sowohl der Nitrilkautschuk-Zusatz im Vergleich C als auch der Harzzusatz im Vergleich B zu einer Naturkautschuk-Gummimischung eine Steigerung der Härte und der Spannungswerte gegenüber dem Vergleich A, in der Naturkautschuk allein eingesetzt wurde, bewirkt, jedoch in beiden Fällen bei weitem nicht die Werte vom Beispiel 1 erreicht werden. Durch den Harzzusatz im Vergleich B werden beispielsweise die Spannungswerte bei 10 % bzw. 50 % Dehnung gegenüber reinem Naturkautschuk von 0,6 bzw. 0,8 MPa auf 0,9 bzw. 1,5 MPa und die Härte von 40 auf 44 Einheiten gesteigert. Überraschenderweise tritt aber in Beispiel 1 für die entsprechenden Spannungswerte eine Erhöhung auf 2,1 bzw. 3,2 MPa und für die Härte auf 58 gegenüber dem Vergleich A ein.

Versuchsreihe 2 (Beispiel 2 bis 5, Vergleiche D und E)

NR- und NBR-Kautschuk mit Phenolnovolak und Hexa, rußgefüllt

Eingesetzt wurde der Phenolnovolak und die Kautschuktypen der Versuchsreihe 1.

Die erfindungsgemäßen Formulierungen der Beispiele 2 bis 5 zeigen im Vergleich zu nicht verstärkten bzw. harzhaltigen Mischungen D bzw. E ein analoges Ergebnis wie Versuchsreihe 1. Die höchste Verstärkungswirkung bei 20 Gewichtsteilen Harzzusatz (Harz + Härter) wird im Bereich von 5 bis 10 % Nitrilkautschuk-Anteil in der Elastomermischung gefunden, während bei 2,5 % Nitrilkautschuk-Anteil zwar schon hohe Härten, aber noch keine erhöhten Spannungswerte erhalten werden. Die Ergebnisse bei Verwendung eines Nitrilkautschuk-modifizierten Phenolharzes (Beispiel 5) unterscheiden sich praktisch nicht von denen bei der separaten Einmischung von Nitrilkautschuk und Phenolharz (Beispiel 4).

Versuchsreihe 3 (Beispiel 6 und Vergleiche F bis H)

NR- und NBR- bzw. CR-Kautschuk mit Novolak und Hexa, rußgefüllt

In dieser Versuchsreihe wurde ein handelsüblicher Novolak mit einem Schmelzbereich von 83 bis 88°C (Kapillar-Verfahren DIN 53 736) und einer Viskosität bei 20°C von 170 bis 250 mPa.s (40 %ig in Ethylenglykolmonoethylether) verwendet. In Beispiel 6 wurde gegenüber den Vergleichsversuchen F und G erfindungsgemäß ein Anteil von 5 Gewichtsteilen Naturkautschuk durch einen handelsüblichen NBR-Kautschuk mit 34 % Acrylnitrilgehalt aus Beispiel 1 ersetzt. Im Vergleichsversuch H erfolgte der Einsatz von 5 Gewichtsteilen eines handelsüblichen Chloroprenkautschuks (Neopren AC weich der Fa. Du Pont) anstelle von 5 Gewichtsteilen Naturkautschuk. Die Dosierungen von Harz und Härtungsmittel wurden im Vergleich zu den Versuchsreihen 1 und 2 auf die Hälfte reduziert.

Der Vergleichsversuch G zeigt die verstärkende Wirkung des Harzsystems im Vergleich zu der harzfreien Formulierung F durch die gesteigerten Spannungswerte und der Härte. Nur unwesentlich bessere Ergebnisse werden mit der Vergleichsmischung H erhalten, so daß hieraus die geringe Wirksamkeit der Polychloropren-Zusatzes auf die Verstärkung ersichtlich ist. Die Prüfwerte im Beispiel 6 liegen aber bei Anwendung von Nitrilkautschuk in der Gummimischung sowohl für die Härte als auch für die Spannungswerte deutlich höher.

Versuchsreihe 4 (Beispiele 7 und 8, Vergleiche I und J)

NR- und NBR- bzw. PU- oder CSM-Kautschuk mit Phenolnovolak und Melaminharz, rußgefüllt

Als zusätzlicher Beschleuniger für die Harzvernetzung wurde 1 Gewichtsteil Benzoesäure mitverwendet. Außer einem handelsublichen Nitrilkautschuk mit 34 % Acrylnitrilgehalt gemäß Beispiel 1 wurde als polarer Kautschuk auch ein handelsüblicher Polyurethankautschuk (Desmocoll 400 der Fa. Bayer AG) in Beispiel 8 verwendet. Der Vergleichsversuch I enthält keinen polaren Kautschuk, während im Vergleichsversuch J 5 Gewichtsteile Naturkautschuk durch chlorsulfoniertes Polyethylen (Hypalon 20 der Fa. Du Pont) ersetzt sind. Auch bei diesen Beispielen mit einem anderen Härtungsmittel ist die deutlich höhere Verstärkungswirkung der erfindungsgemäßen Formulierungen gegenüber den Vergleichsversuchen I und J zu erkennen. Der Zusatz von Chlorsulfoniertem Polyethylen gemäß Vergleichsversuch J bewirkt gegenüber einer reinen Naturkautschuk-Formulierung entsprechend Vergleichsversuch I keinen Verstärkungseffekt.

Versuchsreihe 5 (Beispiel 9 und Vergleiche K bis M)

SBR- und NBR-Kautschuk mit Phenolnovolak und Hexa, rußgefüllt

Der handelsübliche Styrolbutadien-Kautschuk mit 23,5 Gew.-% gebundenem Styrol (BUNA 1620 der Fa. Hüls AG) lag in Form eines Masterbatch mit Ruß (100 : 50 Gewichtsteile) vor. Als Phenolharz wurde der gleiche Novolak wie in Versuchsreihe 3 und als Nitrilkautschuk ein handelsüblicher Typ mit 34 Gew.-% Acrylnitrilgehalt wie in den früheren Beispielen verwendet. Beim Zusatz des Nitrilkautschuks zum SBR-Kautschuk läßt der Vergleichsversuch L gegenüber dem Vergleichsversuch K einen Anstieg der Spannungswerte, aber keinen Härteanstieg erkennen. In Vergleich M führt der Zusatz des Verstärkerharzes zum SBR-Kautschuk zu einer Steigerung der Spannungswerte, insbesondere bei geringen Dehnungen und zu einem deutlichen Härteanstieg. Das erfindungsgemäße Beispiel 9 mit gemeinsamen Einsatz von Nitrilkautschuk und Verstärkerharzsystem im SBR-Kautschuk zeigt jedoch gegenüber den Vergleichen K, L und M eine wesentlich stärkere Erhöhung der Spannungswerte und der Härte der Vulkanisate. Die Meßergebnisse erreichen überraschend hohe Werte.

Versuchsreihe 6 (Beispiele 10 und 11 und Vergleiche L, N und 0)

SBR- und NBR- bzw. PU-Kautschuk mit Phenolnovolak bzw. Resorcin und Hexa, rußgefüllt

Wie Beispiel 10 zeigt, führt die gemeinsame Anwendung von NBR-Kautschuk (34% Nitrilgehalt) und dem Verstärkerharzsystem bestehend aus Recorcin und Hexa zu deutlich höheren Spannungswerten und Härten als die alleinige Anwendung einer dieser beiden Komponenten im SBR-Kautschuk gemäß den Vergleichsversuchen L und N. Weiterhin zeigt Beispiel 11, daß der Einsatz von Polyurethan-Kautschuk anstelle von NBR-Kautschuk ohne Harzzusatz gemäß Vergleich 0 nur einen geringen, mit gleichzeitigen Harzzusatz aber einen hohen Verstärungseffekt ergibt.

Versuchreihe 7 (Beispiel 12 und Vergleich P bis S)

NR- und NBR-Kautschuk mit Phenolnovolak und Hexa, mit Ruß und Kieselsäure als Füllstoff

In dieser Versuchsreihe wurde derselbe NBR-Kautschuk und Phenolnovolak wie in Versuchsreihe 3 · eingesetzt und außer Ruß noch gefällte Kieselsäure als Füllstoff verwendet.

Während der Ersatz von 5 Gewichtsteilen Naturkautschuk durch den NBR-Kautschuk im Vergleich S gegenüber dem Vergleich P keine oder nur geringere Erhöhungen von Härte und Spannungswerten bewirkt und der alleinige Zusatz eines Phenolharzsystems im Vergleich S zu einer deutlichen Steigerung der Prüfwerte führt, weist die erfindungsgemäße Mischung nach Beispiel 12 gegenüber dem Vergleich S noch um über 30 % höhere Spannungswerte (bis zu 100 % Dehnung) und eine um 13 Einheiten höhere Härte auf.

Versuchsreihe 8 (Beispiele 13, 14 und 15 wie Vergleiche T, U und V)

NR- und NBR-Kautschuk mindestens 32% Acrylnitrilgehalt mit Phenolnovolak und Hexa, rußgefüllt

Gemäß den Ergebnissen T und U ist die Verstärkung ohne Harzzusatz gering, im Versuch V bei Anwendung von Phenolnovolak deutlich höher. NBR-Kautschukzusäzte führen aber parallel zu steigendem Acrylnitrilgehalt zu noch höherer Verstärkerwirkung. So steigt beispielsweise die Härte von 79 Einheiten gemäß Versuch V um 8 Einheiten auf 87, bei Verwendung von NBR-Kautschuk mit 32% Acrylnitrilgehalt, bei Verwendung von NBR-Kautschuk mit 38% Acrylnitrilgehalt sogar 12 Einheiten auf 91. Entsprechend gute Werte werden auch nach dem erfindungsgemäßen Verfahren bei den Spannungswerten bei 10% Dehnung erhalten.

Versuchsreihen 9 und 10 (Beispiele 16 - 21 sowie Vergleiche W - Z)

NR- und NBR-Kautschuk mit mehr als 29% Acrylnitrilgehalt mit Phenolnovolak und Hexa bzw. Hexamethoxymethylmelamin (Versuchsreihe 10), rußgefüllt

Die Ergebnisse zeigen, daß mit Zusatz eines NBR-Kautschuks mit 32 und mehr % Acrylnitrilgehalt eine deutliche Steigerung der Verstärkungswirkung eintreten kann. In Abhängigkeit vom Härtungsmittelsystem können sich zwar unterschiedliche Veränderungen der Eigenschaften, Spannungswerte und Härte ergeben, jedoch zeigt sich generell, daß mit 32% Acrylnitrilgehalt des NBR-Kautschuks eine Erhöhung der Wirkung beginnt und mit weiter zunehmendem Acrylnitrilgehalt eine bedeutende Steigerung des Verstärkungseffekts auftritt.

In den nachfolgenden Tabellen 1 bis 10 werden die Mischungsverhältnisse der einzelnen Versuchsreihen und die erhaltenen Prüfergebnisse angeführt.

Tabelle 1

### Versuchsreihe 1

| | Beispiel 1 | Vergleichsversuch A | B | C |
|---|---|---|---|---|
| Naturkautschuk | 90 | 100 | 100 | 90 |
| NBR-Kautschuk | 10 | – | – | 10 |
| Phenolnovolak | 18 | – | 18 | – |
| Hexa | 2 | – | 2 | – |
| Vulkanisation 145°C/min | 40 | 30 | 40 | 20 |

### Prüfergebnisse:

| | | Beispiel 1 | A | B | C |
|---|---|---|---|---|---|
| Reißfestigkeit | (MPa) | 16,7 | 9,4 | 16,9 | 13,1 |
| Reißdehnung | (%) | 332 | 350 | 334 | 341 |
| Spannungswert 10 % Dehnung | (MPa) | 2,1 | 0,6 | 0,9 | 0,7 |
| Spannungswert 50 % Dehnung | (MPa) | 3,2 | 0,8 | 1,5 | 1,1 |
| Spannungswert 100 % Dehnung | (MPa) | 4,7 | 1,2 | 2,6 | 1,6 |
| Spannungswert 200 % Dehnung | (MPa) | 8,8 | 2,1 | 6,7 | 3,4 |
| Spannungswert 300 % Dehnung | (MPa) | 14,5 | 3,8 | 13,7 | 8,8 |
| Rückprallelastizität 23°C | (%) | 45 | 37 | 38 | 31 |
| Härte Shore A 23°C | (°) | 58 | 40 | 44 | 40 |

Tabelle 2

Versuchsreihe 2

|  |  | Beispiel |  |  |  | Vergleichsversuch |  |
|  |  | 2 | 3 | 4 | 5 | D | E |
|---|---|---|---|---|---|---|---|
| Naturkautschuk |  | 97,5 | 95 | 90 | 90 | 100 | 100 |
| NBR-Kautschuk |  | 2,5 | 5 | 10 | – | – | – |
| Ruß N 330 |  | 50 | 50 | 50 | 50 | 50 | 50 |
| Phenolnovolak |  | 18 | 18 | 18 | 9 | – | 18 |
| Phenolnovolak modifiziert* |  | – | – | – | 19 | – | – |
| Hexa |  | 2 | 2 | 2 | 2 | – | 2 |
| Vulkanisation 145°C/min |  | 30 | 30 | 30 | 30 | 20 | 30 |

Prüfergebnisse:

| Reißfestigkeit | (MPa) | 15,5 | 12,9 | 14,2 | 13,6 | 21,8 | 18,4 |
|---|---|---|---|---|---|---|---|
| Reißdehnung | (%) | 277 | 153 | 219 | 208 | 312 | 285 |
| Spannungswert 10 % Dehnung | (MPa) | 3,9 | 6,1 | 5,2 | 5,2 | 1,4 | 3,6 |
| Spannungswert 50 % Dehnung | (MPa) | 5,0 | 7,8 | 6,8 | 6,7 | 2,8 | 5,1 |
| Spannungswert 100 % Dehnung | (MPa) | 6,4 | 10,0 | 8,8 | 8,5 | 5,7 | 7,5 |
| Spannungswert 200 % Dehnung | (MPa) | 10,9 | – | 13,2 | 13,4 | 13,5 | 13,3 |
| Rückprallelastizität 23°C | (%) | 37 | 34 | 30 | 30 | 45 | 39 |
| Härte Shore A 23°C | (°) | 92 | 96 | 96 | 96 | 68 | 84 |

* Der Phenolnovolak war mit NBR-Kautschuk in der Weise modifiziert, daß er aus 9 Gewichtsteilen Phenolnovolak und 10 Gewichtsteilen NBR-Kautschuk bestand.

Tabelle 3

| Versuchsreihe 3 | | Beispiel 6 | Vergleichsversuch F | G | H |
|---|---|---|---|---|---|
| Naturkautschuk | | 95 | 100 | 100 | 95 |
| NBR-Kautschuk | | 5 | – | – | – |
| Chloropren-Kautschuk | | – | – | – | 5 |
| Ruß N 330 | | 50 | 50 | 50 | 50 |
| Phenolnovolak | | 9 | – | 9 | 9 |
| Hexa | | 1 | – | 1 | 1 |
| Vulkanisation 145°C/min | | 20 | 20 | 20 | 20 |

Prüfergebnisse:

| | | Beispiel 6 | F | G | H |
|---|---|---|---|---|---|
| Reißfestigkeit | (MPa) | 14,9 | 22,2 | 16,5 | 14,2 |
| Reißdehnung | (%) | 240 | 357 | 297 | 263 |
| Spannungswert 10 % Dehnung | (MPa) | 2,7 | 0,9 | 1,9 | 2,1 |
| Spannungswert 50 % Dehnung | (MPa) | 4,6 | 1,9 | 3,0 | 3,2 |
| Spannungswert 100 % Dehnung | (MPa) | 7,1 | 4,0 | 4,8 | 5,1 |
| Spannungswert 200 % Dehnung | (MPa) | 12,7 | 10,7 | 10,3 | 10,4 |
| Rückprallelastizität 23°C | (%) | 30 | 39 | 39 | 37 |
| Härte Shore A 23°C | (°) | 87 | 63 | 81 | 83 |

Tabelle 4

Versuchsreihe 4

| | Beispiel | | Vergleichsversuch | |
|---|---|---|---|---|
| | 7 | 8 | I | J |
| Naturkautschuk | 95 | 95 | 100 | 95 |
| NBR-Kautschuk | 5 | – | – | – |
| PU-Kautschuk | – | 5 | – | – |
| Chlorsulfoniertes Polyethylen | – | – | – | 5 |
| Ruß N 330 | 50 | 50 | 50 | 50 |
| Phenolnovolak | 14 | 14 | 14 | 14 |
| Hexamethoxymethylmelamin | 6 | 6 | 6 | 6 |
| Vulkanisation 145°C/min | 60 | 60 | 60 | 60 |

Prüfergebnisse:

| | | 7 | 8 | I | J |
|---|---|---|---|---|---|
| Reißfestigkeit | (MPa) | 10,2 | 10,9 | 11,3 | 11,3 |
| Reißdehnung | (%) | 122 | 166 | 189 | 172 |
| Spannungswert 10 % Dehnung | (MPa) | 5,2 | 5,6 | 4,5 | 3,9 |
| Spannungswert 50 % Dehnung | (MPa) | 6,7 | 6,0 | 5,3 | 5,4 |
| Spannungswert 100 % Dehnung | (MPa) | 9,1 | 8,0 | 7,0 | 7,4 |
| Rückprallelastizität 23°C | (%) | 33 | 35 | 39 | 36 |
| Härte Shore A 23°C | (°) | 94 | 95 | 91 | 91 |

Tabelle 5

Versuchsreihe 5

|  | | Beispiel 9 | Vergleichsversuch K | L | M |
|---|---|---|---|---|---|
| SBR-Kautschuk | | 95 | 100 | 95 | 100 |
| NBR-Kautschuk | | 5 | – | 5 | – |
| Ruß N 330 | | 50 | 50 | 50 | 50 |
| Phenolnovolak | | 9 | – | – | 9 |
| Hexa | | 1 | – | – | 1 |
| Vulkanisation 155°C/min | | 30 | 30 | 30 | 30 |

Prüfergebnisse:

| | | Beispiel 9 | K | L | M |
|---|---|---|---|---|---|
| Reißfestigkeit | (MPa) | 22,6 | 23,4 | 20,3 | 22,8 |
| Reißdehnung | (%) | 246 | 306 | 216 | 289 |
| Spannungswert 10 % Dehnung | (MPa) | 4,0 | 0,8 | 1,4 | 2,5 |
| Spannungswert 50 % Dehnung | (MPa) | 6,1 | 2,3 | 3,6 | 3,8 |
| Spannungswert 100 % Dehnung | (MPa) | 9,8 | 4,7 | 7,8 | 6,7 |
| Spannungswert 200 % Dehnung | (MPa) | 18,7 | 13,4 | 18,3 | 15,5 |
| Rückprallelastizität 23°C | (%) | 33 | 38 | 34 | 37 |
| Härte Shore A 23°C | (°) | 91 | 73 | 72 | 84 |

Tabelle 6

Versuchsreihe 6

| | Bsp. 10 | Vgl. L | N | Bsp. 11 | Vgl. O |
|---|---|---|---|---|---|
| SBR-Kautschuk | 95 | 95 | 100 | 95 | 95 |
| NBR-Kautschuk | 5 | 5 | – | – | – |
| PU-Kautschuk | – | – | – | 5 | 5 |
| Ruß N 330 | 50 | 50 | 50 | 50 | 50 |
| Phenolnovolak | – | – | – | 9 | –. |
| Resorcin | 6 | – | 6 | – | – |
| Hexa | 4 | – | 4 | 1 | – |
| Vulkanisation 155°C/min | 40 | 30 | 40 | 30 | ·30 |

Prüfergebnisse:

| | | Bsp. 10 | Vgl. L | N | Bsp. 11 | Vgl. O |
|---|---|---|---|---|---|---|
| Reißfestigkeit | (MPa) | 21,1 | 20,3 | 23,5 | 20,3 | 23,7 |
| Reißdehnung | (%) | 249 | 216 | 301 | 254 | 269 |
| Spannungswert 10 % Dehnung | (MPa) | 3,1 | 1,4 | 2,1 | 2,7 | 1,3 |
| Spannungswert 50 % Dehnung | (MPa) | 4,9 | 3,6 | 3,6 | 4,5 | 2,9 |
| Spannungswert 100 % Dehnung | (MPa) | 8,2 | 7,8 | 6,6 | 8,1 | 6,5 |
| Spannungswert 200 % Dehnung | (MPa) | 16,9 | 18,3 | 15,2 | 16,4 | 17,1 |
| Rückprallelastizität 23°C | (%) | 37 | 34 | 39 | 35 | 35 |
| Härte Shore A 23°C | (°) | 89 | 72 | 82 | 88 | 72 |

Tabelle 7

| Versuchsreihe 7 | | Beispiel 12 | Vergleichsversuch P | R | S |
|---|---|---|---|---|---|
| Naturkautschuk | | 95 | 100 | 95 | 100 |
| NBR-Kautschuk | | 5 | – | 5 | – |
| Ruß N 326 | | 40 | 40 | 40 | 40 |
| Kieselsäure | | 15 | 15 | 15 | 15 |
| Phenolnovolak | | 18 | – | – | 18 |
| Hexa | | 2 | – | – | 2 |
| Vulkanisation 145°C/min | | 45 | 10 | 10 | 45 |
| **Prüfergebnisse:** | | | | | |
| Reißfestigkeit | (MPa) | 14,0 | 22,9 | 20,0 | 14,9 |
| Reißdehnung | (%) | 237 | 452 | 454 | 341 |
| Spannungswert 10 % Dehnung | (MPa) | 3,6 | 0,6 | 0,7 | 1,9 |
| Spannungswert 50 % Dehnung | (MPa) | 5,1 | 1,3 | 1,3 | 3,1 |
| Spannungswert 100 % Dehnung | (MPa) | 7,6 | 2,2 | 2,2 | 5,3 |
| Spannungswert 200 % Dehnung | (MPa) | 11,9 | 6,1 | 5,4 | 11,7 |
| Rückprallelastizität 23°C | (%) | 37 | 41 | 34 | 38 |
| Härte Shore A 23°C | (°) | 89 | 55 | 57 | 76 |

Tabelle 8

Versuchsreihe 8

| | | Beispiel | | | Vergleichsversuch | | |
|---|---|---|---|---|---|---|---|
| | | 13 | 14 | 15 | T | U | V |
| Naturkautschuk | | 90 | 90 | 90 | 100 | 90 | 100 |
| NBR-Kautschuk 32% ACN* | | 10 | – | – | – | – | – |
| NBR-Kautschuk 34% ACN | | – | 10 | – | – | – | – |
| NBR-Kautschuk 38% ACN | | – | – | 10 | – | 10 | – |
| Ruß N 330 | | 50 | 50 | 50 | 50 | 50 | 50 |
| Phenolnovolak | | 9 | 9 | 9 | – | – | 9 |
| Hexa | | 1 | 1 | 1 | – | – | 1 |
| Vulkanisation 145°C/min | | 45 | 45 | 45 | 20 | 20 | 30 |

Prüfergebnisse:

| | | 13 | 14 | 15 | T | U | V |
|---|---|---|---|---|---|---|---|
| Reißfestigkeit | (MPa) | 15,5 | 15,6 | 15,4 | 21,6 | 18,7 | 18,4 |
| Reißdehnung | (%) | 198 | 203 | 213 | 266 | 244 | 279 |
| Spannungswert 10 % Dehnung | (MPa) | 2,1 | 2,3 | 2,5 | 1,0 | 1,0 | 1,6 |
| Spannungswert 50 % Dehnung | (MPa) | 4,8 | 5,3 | 5,3 | 2,7 | 3,0 | 3,1 |
| Spannungswert 100 % Dehnung | (MPa) | 8,2 | 8,6 | 8,3 | 6,1 | 6,2 | 6,8 |
| Spannungswert 200 % Dehnung | (MPa) | – | 15,3 | 14,5 | 15,8 | 14,9 | 14,2 |
| Rückprallelastizität 23°C | (%) | 35 | 34 | 32 | 51 | 38 | 50 |
| Härte Shore A 23°C | (°) | 87 | 90 | 91 | 71 | 75 | 79 |

* ACN = Acrylnitrilgehalt

14

Tabelle 9

| Versuchsreihe 9 | | Beispiel | | | Vergleichs-versuch | |
|---|---|---|---|---|---|---|
| | | 16 | 17 | 18 | W | X |
| Naturkautschuk | | 95 | 95 | 95 | 95 | 95 |
| NBR-Kautschuk 29% ACN* | | – | – | – | – | 5 |
| NBR-Kautschuk 30,5% ACN | | – | – | – | 5 | – |
| NBR-Kautschuk 32% ACN | | – | – | 5 | – | – |
| NBR-Kautschuk 34% ACN | | – | 5 | – | – | – |
| NBR-Kautschuk 38% ACN | | 5 | – | – | – | – |
| Ruß N 330 | | 50 | 50 | 50 | 50 | 50 |
| Phenolnovolak | | 18 | 18 | 18 | 18 | 18 |
| Hexa | | 2 | 2 | 2 | 2 | 2 |
| Vulkanisation 145°C/min | | 45 | 45 | 45 | 45 | 45 |

Prüfergebnisse:

| | | 16 | 17 | 18 | W | X |
|---|---|---|---|---|---|---|
| Reißfestigkeit | (MPa) | 13,8 | 13,3 | 14,7 | 13,1 | 13,3 |
| Reißdehnung | (%) | 185 | 182 | 193 | 187 | 180 |
| Spannungswert 10 % Dehnung | (MPa) | 4,3 | 3,6 | 2,9 | 2,5 | 2,7 |
| Spannungswert 50 % Dehnung | (MPa) | 6,8 | 6,2 | 5,5 | 4,7 | 5,1 |
| Spannungswert 100 % Dehnung | (MPa) | 8,7 | 8,6 | 8,7 | 7,6 | 8,1 |
| Spannungswert 200 % Dehnung | (MPa) | – | – | – | – | – |
| Rückprallelastizität 23°C | (%) | 41 | 40 | 39 | 41 | 40 |
| Härte Shore A 23°C | (°) | 95 | 94 | 92 | 88 | 89 |

*ACN = Acrylnitrilgehalt

15

Tabelle 10

Versuchsreihe 10

| | Beispiel | | | Vergleichs-versuch | |
|---|---|---|---|---|---|
| | .19 | 20 | 21 | Y | Z |
| Naturkautschuk | 95 | 95 | 95 | 95 | 95 |
| NBR-Kautschuk 29% ACN* | – | – | – | – | 5 |
| NBR-Kautschuk 30,5% ACN | – | – | – | 5 | – |
| NBR-Kautschuk 32% ACN | – | – | 5 | – | – |
| NBR-Kautschuk 34% ACN | – | 5 | – | – | – |
| NBR-Kautschuk 38% ACN | 5 | – | – | – | – |
| Ruß N 330 | 50 | 50 | 50 | 50 | 50 |
| Phenolnovolak | 14 | 14 | 14 | 14 | 14 |
| Hexamethoxymethylmelamin | 6 | 6 | 6 | 6 | 6 |
| Vulkanisation 145°C/min | 60 | 60 | 60 | 60 | 60 |

Prüfergebnisse:

| | | Beispiel | | | Vergleichs-versuch | |
|---|---|---|---|---|---|---|
| Reißfestigkeit | (MPa) | 12,5 | 12,8 | 13,9 | 14,8 | 13,8 |
| Reißdehnung | (%) | 171 | 190 | 193 | 233 | 218 |
| Spannungswert 10 % Dehnung | (MPa) | 4,3 | 3,2 | 2,9 | 2,6 | 2,4 |
| Spannungswert 50 % Dehnung | (MPa) | 7,3 | 6,0 | 5,9 | 5,0 | 4,8 |
| Spannungswert 100 % Dehnung | (MPa) | 9,0 | 8,3 | 8,7 | 7,6 | 7,4 |
| Spannungswert 200 % Dehnung | (MPa) | – | – | – | 13,1 | 12,6 |
| Rückprallelastizität 23°C | (%) | 34 | 32 | 32 | 35 | 32 |
| Härte Shore A 23°C | (°) | 95 | 92 | 90 | 89 | 89 |

*ACN = Acrylnitrilgehalt

**Patentansprüche für die Vertragsstaaten: BE, CH, DE, FR, GB, IT, LI, LU, NL**

1. Verstärkte Kautschukmischung aus A) mindestens einem Natur-, Styrolbutadien-, Polybutadien-, Polyisopren-, Transpolyoctenylen-, Ethylen-Propylen-Dien-Terpolymer- und Butyl-Kautschuk, B) mindestens einem Phenolnovolak-Harz und/oder reaktiven Polyphenol, C) Härtungsmitteln und gegebenenfalls D) üblichen Zusatzstoffen, dadurch gekennzeichnet, daß die Kautschuk-mischung als zusätzliche Komponente E) mindestens einen polaren, chlorfreien Kautschuk in Form von Nitrilkautschuk mit mindestens 32% Nitrilgehalt oder Polyurethankautschuk in einem Gewichtsanteil von 1 bis 49 Gew.-%, bezogen auf die Gesamtmenge an Kautschuk enthält.

2. Verfahren zur Verstärkung einer Mischung aus A) mindestens einem Natur-, Styrolbutadien-, Polybutadien-, Polyisopren-, Transpolyoctenylen-, Ethylen-Propylen-Dien-Terpolymer- und Butyl-Kautschuk, B) mindestens einem Phenolnovolak-Harz und/oder reaktiven Polyphenol, C) Härtungsmitteln und gegebenenfalls D) üblichen Zusatzstoffen, dadurch gekennzeichnet, daß der Gummimischung der Komponenten A) bis D) als weitere Komponente E) mindestens ein polarer chlorfreier Kautschuk in Form von Nitrilkautschuk mit mindestens 32% Nitrilgehalt oder Polyurethankautschuk in einem Gewichtsanteil von 1 bis 49 Gew.-%, bezogen auf die Gesamtmenge an Kautschuk zugemischt wird.

3. Verfahren nach Anspruch 2, dadurch gekennzeichnet, daß der Novolak sowohl oberhalb als auch unterhalb seiner Erweichungs- oder Schmelztemperatur eingearbeitet und gemeinsam mit oder getrennt vom Härtungsmittel zugegeben wird.

4. Verfahren nach Anspruch 3, dadurch gekennzeichnet, daß das Härtungsmittel am Ende des Mischvorganges bei Temperaturen zwischen 80 und 120°C eingearbeitet wird.

5. Ausführungsform nach einem oder mehreren der Ansprüche 1 bis 4, dadurch gekennzeichnet, daß Füllstoffe, Vulkanisationsmittel, Beschleuniger, Aktivatoren und Verarbeitungshilfsmittel als übliche Zusatzstoffe enthalten sind.

6. Ausführungsform nach einem oder mehreren der Ansprüche 1 bis 5, dadurch gekennzeichnet, daß als üblicher Zusatzstoff Ruß verwendet wird.

7. Ausführungsform nach einem oder mehreren der Ansprüche 1 bis 6, dadurch gekennzeichnet, daß der polare Kautschuk in Mengen von 2 bis 39 %, insbesondere 3 bis 30 Gew.-% enthalten ist.

8. Ausführungsform nach einem oder mehreren der Ansprüche 1 bis 7, dadurch gekennzeichnet, daß als Härtungsmittel für die Harze eine Formaldehyd oder Methylengruppen abspaltende Verbindung und/oder ein Aminharz mit freien oder veretherten Methylolgruppen verwendet wird.

9. Ausführungsform nach einem oder mehreren der Ansprüche 1 bis 8, dadurch gekennzeichnet, daß als Novolak-Harze Kondensationsprodukte aus Phenol, substituierten Phenolen und/oder mehrwertigen Ein- oder Mehrkernphenolen mit Aldehyden, vorzugsweise Formaldehyd, verwendet werden.

10. Ausführungsform nach einem oder mehreren der Ansprüche 1 bis 9, dadurch gekennzeichnet, daß als reaktive Polyphenole Resorcin oder Diphenylolpropan, Diphenylolmethan oder Naphthole verwendet werden.

11. Verwendung der verstärkten Kautschukmischungen zur Herstellung von technischen Gummiwaren.

12. Verwendung nach Anspruch 11 zur Herstellung von Dämpfungselementen, Gummimanschetten, Belägen, Förderbändern und Reifen.

**Patentansprüche für den Vertragsstaat: AT**

1. Verfahren zur Verstärkung einer Mischung aus A) mindestens einem Natur-, Styrolbutadien-, Polybutadien-, Polyisopren-, Transpolyoctenylen-, Ethylen-Propylen-Dien-Terpolymer- und Butyl-Kautschuk, B) mindestens einem Phenolnovolak-Harz und/oder reaktiven Polyphenol, C) Härtungsmitteln und gegebenenfalls D) üblichen Zusatzstoffen, dadurch gekennzeichnet, daß der Gummimischung der Komponenten A) bis D) als weitere Komponente E) mindestens ein polarer chlorfreier Kautschuk in Form von Nitrilkautschuk mit mindestens 32% Nitrilgehalt oder Polyurethankautschuk in einem Gewichtsanteil von 1 bis 49 Gew.-%, bezogen auf die Gesamtmenge an Kautschuk zugemischt wird.

2. Verfahren nach Anspruch 1, dadurch gekennzeichnet, daß der Novolak sowohl oberhalb als auch unterhalb seiner Erweichungs- oder Schmelztemperatur eingearbeitet und gemeinsam mit oder getrennt vom Härtungsmittel zugegeben wird.

3. Verfahren nach Anspruch 2, dadurch gekennzeichnet, daß das Härtungsmittel am Ende des Mischvorganges bei Temperaturen zwischen 80 und 120°C eingearbeitet wird.

4. Verfahren nach einem oder mehreren der Ansprüche 1 bis 3, dadurch gekennzeichnet, daß Füllstoffe, Vulkanisationsmittel, Beschleuniger, Aktivatoren und Verarbeitungshilfsmittel aus übliche Zusatzstoffe enthalten sind.

5. Verfahren nach einem oder mehreren der Ansprüche 1 bis 4, dadurch gekennzeichnet, daß als üblicher Zusatzstoff Ruß verwendet wird.

6. Verfahren nach einem oder mehreren der Ansprüche 1 bis 5, dadurch gekennzeichnet, daß der polare Kautschuk in Mengen von 2 bis 39 %, insbesondere 3 bis 30 Gew.-% enthalten ist.

7. Verfahren nach einem oder mehreren der Ansprüche 1 bis 6, dadurch gekennzeichnet, daß als Härtungsmittel für die Harze eine Formaldehyd oder Methylengruppenabspaltende Verbindung und/oder ein Aminharz mit freien oder veretherten Methylolgruppen verwendet wird.

8. Verfahren nach einem oder mehreren der Ansprüche 1 bis 7, dadurch gekennzeichnet, daß als Novolak-Harze Kondensationsprodukte aus Phenol, substituierten Phenolen und/oder mehrwertigen Ein- oder Mehrkernphenolen mit Aldehyden, vorzugsweise Formaldehyd, verwendet werden.

9. Verfahren nach einem oder mehreren der Ansprüche 1 bis 8, dadurch gekennzeichnet, daß als reaktive Polyphenole Resorcin oder Diphenylolpropan, Diphenylolmethan oder Naphthole verwendet werden.

10. Verwendung der verstärkten Kautschukmischungen zur Herstellung von technischen Gummiwaren.

11. Verwendung nach Anspruch 10 zur Herstellung von Dämpfungselementen, Gummimanschetten, Belägen, Förderbändern und Reifen.

**Claims for the Contracting States: BE, CH, DE, FR, GB, IT, LI, LU, NL**

1. A reinforced rubber mixture composed of A) at least one natural, styrene/butadiene, polybutadiene, polyisoprene, transpolyoctenylene, ethylene/propylene/diene terpolymer and butyl rubber, B) at least one phenol novolak resin and/or reactive polyphenol, C) curing agents and, if appropriate, D) customary additives, wherein the rubber mixture contains, as an additional component E), at least one polar, chlorine-free rubber in the form of nitrile rubber having a nitrile content of at least 32 % or polyurethane rubber in a proportion by weight of 1 to 49 % by weight, relative to the total amount of rubber.

2. A process for reinforcing a mixture composed of A) at least one natural, styrene/butadiene, polybutadiene, polyisoprene, transpolyoctenylene, ethylene/propylene/diene terpolymer and butyl rubber, B) at least one phenol novolak resin and/or reactive polyphenol, C) curing agents and, if appropriate, D) customary additiveg, which comprises mixing into the rubber mixture of the components A) to D), as a further component E), at least one polar, chlorine-free rubber in the form of nitrile rubber having a nitrile content of at least 32 % or polyurethane rubber in a proportion by weight of 1 to 49 % by weight, relative to the total amount of rubber.

3. The process as claimed in claim 2, wherein the novolak is incorporated either above or below its softening point or fusion temperature and is added jointly with, or separately from, the curing agent.

4. The process as claimed in claim 3, wherein the curing agent is incorporated at the end of the mixing process at temperatures between 80 and 120°C.

5. The embodiment as claimed in one or more of claim 1 to 4, wherein fillers, vulcanizing agents, accelerators, activators and processing auxiliaries are present as customary additives.

6. The embodiment as claimed in one or more of claims 1 to 5, wherein carbon black is used as a customary additive.

7. The embodiment as claimed in one or more of claims 1 to 6, wherein the polar rubber is present in amounts of 2 to 39 %, in particular 3 to 30 %, by weight.

8. The embodiment as claimed in one or more of claims 1 to 7, wherein a compound which splits off formaldehyde or methylene groups and/or an amine resin having free or etherified methylol groups is used as the curing agent for the resins.

9. The embodiment as claimed in one or more of claims 1 to 8, wherein condensation products formed from phenol, substituted phenols and/or polyhydric mononuclear or polynuclear phenols and aldehydes, preferably formaldehyde, are used as novolak resins.

10. The embodiment as claimed in one or more of claims 1 to 9, wherein resorcinol or diphenylolpropane, diphenylolmethane or naphthols are used as reactive polyphenols.

11. The use of the reinforced rubber mixtures for the production of industrial rubber goods.

12. The use as claimed in claim 11 for the production of antivibration units, rubber sleeves, coatings, conveyor belts and tires.

**Claims for the Contracting State: AT**

1. A process for reinforcing a mixture composed of A) at least one natural, styrene/butadiene, polybutadiene, polyisoprene, transpolyoctenylene, ethylene/propylene/diene terpolymer and butyl rubber, B) at least one phenol novolak resin and/or reactive polyphenol, C) curing agents and, if appropriate, D) customary additives, which comprises mixing into the rubber mixture of the components A) to D), as a further component E), at least one polar, chlorine-free rubber in the form of nitrile rubber having a nitrile content of at least 32 % or polyurethane rubber in a proportion by weight of 1 to 49 % by weight, relative to the total amount of rubber.

2. The process as claimed in claim 1, wherein the novolak is incorporated either above or below its softening point or fusion temperature and is added jointly with, or separately from, the curing agent.

3. The process as claimed in claim 2, wherein the curing agent is incorporated at the end of the mixing process at temperatures between 80 and 120°C.

4. The process as claimed in one or more of claims 1 to 3, wherein fillers, vulcanizing agents, accelerators, activators and processing auxiliaries are present as customary additives.

5. The process as claimed in one or more of claims 1 to 4, wherein carbon black is used as a customary additive.

6. The process as claimed in one or more of claims 1 to 5, wherein the polar rubber is present in amounts of 2 to 39 %, in particular 3 to 30 %, by weight.

7. The process as claimed in one or more of claims 1 to 6, wherein a compound which splits off formaldehyde or methylene groups and/or an amine resin having free or etherified methylol groups is used as the curing agent for the resins.

8. The process as claimed in one or more of claims 1 to 7, wherein condensation products formed from phenol, substituted phenols and/or polyhydric mononuclear or polynuclear phenols and aldehydes, preferably formaldehyde, are used as novolak resins.

9. The process as claimed in one or more of claims 1 to 8, wherein resorcinol or diphenylolpropane, diphenylolmethane or naphthols are used as reactive polyphenols.

10. The use of the reinforced rubber mixtures for the production of industrial rubber goods.

11. The use as claimed in claim 10 for the production of antivibration units, rubber sleeves, coatings, conveyor belts and tires.

## Revendications pour les Etats contractants: BE, CH, DE, FR, GB, IT, LI, LU, NL

1. Mélange de caoutchoucs renforcés, constitué A) d'au moins un caoutchouc naturel, styrène-butadiène, polybutadiène, transpolyocténylène, terpolymère éthylène-propylène-diène, ou butyle, B) d'au moins d'une résine novolaque de phenol et/ou d'un polyphénol réactif, C) de durcisseurs, et éventuellement D) d'additifs usuels, caractérisé en ce que le mélange de caoutchouc contient, comme composant supplémentaire, E) au moins un caoutchouc polaire non chloré se présentant sous la forme d'un caoutchouc nitrile ayant une teneur en nitrile d'au moins 32%, ou d'un caoutchouc polyuréthane, en une quantité de 1 à 49% en poids par rapport à la quantité totale de caoutchouc.

2. Procédé pour le renforcement d'un mélange constitué A) d'au moins un caoutchouc naturel, styrène-butadiène, polybutadiène, polyisoprène, transpolyocténylène, terpolymère éthylène-propylène-diène, ou butyle, B) d'au moins d'une résine novolaque de phénol et/ou d'un polyphénol réactif, C) de durcisseurs, et éventuellement D) d'additifs usuels, caractérisé en ce qu'on ajoute au mélange des composants A) à D), en tant que composants supplémentaires E), au moins un caoutchouc polaire non chloré se présentant sous la forme d'un caoutchouc nitrile ayant une teneur en nitrile d'au moins 32%, ou d'un caoutchouc polyuréthane, en une quantité de 1 à 49% en poids par rapport à la quantité totale de caoutchouc.

3. Procédé selon la revendication 2, caractérisé en ce que la novolaque est incorporée tant au-dessus qu'en-dessous de sa température de ramollissement ou de fusion, et est ajoutée en même temps que le durcisseur ou séparément de ce dernier.

4. Procédé selon la revendication 3, caractérisé en ce que le durcisseur est incorporé à la fin de l'opération de mélange à des températures de 80 à 120°C.

5. Mélange de caoutchoucs selon l'une ou plusieurs des revendications 1 à 4, caractérisé en ce qu'il contient comme additifs usuels des charges, des agents de vulcanisation, des accélérateurs, des activateurs et des auxiliaires de mise en œuvre.

6. Mélange de caoutchoucs selon l'une ou plusieurs des revendications 1 à 5, caractérisé en ce qu'on utilise comme additif usuel du noir de carbone.

7. Mélange de caoutchoucs selon l'une ou plusieurs des revendications 1 à 6, caractérisé en ce que le caoutchouc polaire est contenu en des quantités de 2 à 39%, en particulier de 3 à 30% en poids.

8. Mélange de caoutchoucs selon l'une ou plusieurs des revendications 1 à 7, caractérisé en ce qu'on utilise comme durcisseur des résines un composé éliminant du formaldéhyde ou des groupes méthylène et/ou une résine aminée comportant des groupes méthylol libres ou éthérifiés.

9. Mélange de caoutchoucs selon l'une ou plusieurs des revendications 1 à 8, caractérisé en ce qu'on utilise comme résines novolaques des produits de condensation du phénol, de phénols substitués et/ou de polyphénols mono- ou polyhydriques et/ou -cycliques avec des aldéhydes, de préférence le formaldéhyde.

10. Mélange de caoutchoucs selon l'une ou plusieurs des revendications 1 à 9, caractérisé en ce qu'on utilise comme polyphénols réactifs du résorcinol ou du diphénylol-propane, du diphénylolméthane ou des naphtols.

11. Utilisation des mélanges de caoutchoucs renforcés pour la fabrication d'articles en caoutchouc technique.

12. Utilisation selon la revendication 11, pour fabriquer des éléments d'amortissement, des garnitures de caoutchouc, des caoutchoutages, des courroies de transport et des pneumatiques.

## Revendications pour l'Etat contractant: AT

1. Procédé pour le renforcement d'un mélange constitué A) d'au moins un caoutchouc naturel, styrène-butadiène, polybutadiène, polyisoprène, transpolyocténylène, terpolymère éthylène-propylène-diène, ou butyle, B) d'au mois d'une résine novolaque de phénol et/ou d'un polyphénol réactif, C) de durcisseurs, et éventuellement D) d'additifs usuels, caractérisé en ce qu'on ajoute au mélange des composants A) à D), en tant que composants supplémentaires E), au moins un caoutchouc polaire non chloré se présentants sous la forme d'un caoutchouc nitrile ayant une teneur en nitrile d'au moins 32%, ou d'un caoutchouc polyuréthane, en une quantité de 1 à 49% en poids par rapport à la quantité totale de caoutchouc.

2. Procédé selon la revendication 1, caractérisé en ce que la novolaque est incorporée tant au-dessus qu'en-dessous de sa température de ramollissement ou de fusion, et est ajoutée en même temps que le durcisseur ou séparément de ce dernier.

3. Procédé selon la revendication 2, caractérisé en ce que le durcisseur est incorporé à la fin de l'opération de mélange à des températures de 80 à 120°C.

4. Procédé selon l'une ou plusieurs des revendication 1 à 3, caractérisé en ce qu'il contient comme additifs usuels des charges, des agents de vulcanisation, des accélérateurs, des activateurs et des auxiliaires de mise en œuvre.

5. Procédé selon l'une ou plusieurs des revendications 1 à 4, caractérisé en ce qu'on utilise comme additif usuel du noir de carbone.

6. Procédé selon l'une ou plusieurs des revendications 1 à 5, caractérisé en ce que le caoutchouc polaire est contenu en des quantités de 2 à 39%, en particulier de 3 à 30% en poids.

7. Procédé selon l'une ou plusieurs des revendications 1 à 6, caractérisé en ce qu'on utilise comme durcisseur des résines un composé éliminant du formaldéhyde ou des groupes méthylène et/ou une résine aminée comportant des groupes méthylol libres ou éthérifiés.

8. Procédé selon l'une ou plusieurs des revendications 1 à 7, caractérisé en ce qu'on utilise comme résines novolaques des produits de condensation du phénol, de phénols substitués et/ou de polyphénols mono- ou polyhydriques et/ou -cycliques avec des aldéhydes, de préférence le formaldéhyde.

9. Procédé selon l'une ou plusieurs des revendications 1 à 8, caractérisé en ce qu'on utilise comme polyphénols réactifs du résorcinol ou du diphénylolpropane, du diphénylolméthane ou des naphtols.

10. Utilisation des mélanges de caoutchouc renforcés pour la fabrication d'articles en caoutchouc technique.

11. Utilisation selon la revendication 11, pour fabriquer des éléments d'amortissement, des garnitures de caoutchouc, des caoutchoutages, des courroies de transport et des pneumatiques.